# EUROPÄISCHE PATENTSCHRIFT

(11) **EP 4 251 900 B1**
(45) Veröffentlichungstag und Bekanntmachung des Hinweises auf die Patenterteilung: **13.11.2024**
(21) Anmeldenummer: 21820473.3
(22) Anmeldetag: 22.11.2021
(51) Int. Cl.: F16F 9/32, F16F 9/46

(54) **SCHWINGUNGSDÄMPFER MIT AUSSENLIEGENDEN STEUERVENTILEN**
VIBRATION DAMPER HAVING EXTERNAL CONTROL VALVES
AMORTISSEUR DE VIBRATIONS COMPRENANT DES SOUPAPES DE COMMANDE EXTERNES

(30) Priorität: 24.11.2020 DE 102020214751
(43) Veröffentlichungstag der Anmeldung: 04.10.2023
(73) Patentinhaber: VOLKSWAGEN AKTIENGESELLSCHAFT, 38440 Wolfsburg (DE)
(72) Erfinder: KUKLA, Stefan, 29339 Wathlingen (DE); SCHLEGEL, Jan-Rickmer, 38179 Groß Schwülper (DE); STOOF, Denis, 31228 Peine-Stederdorf (DE); BRAS ANTONIO, Joao, 38442 Wolfsburg (DE); LINDNER, Enno, 38100 Braunschweig (DE)
(86) Internationale Anmeldenummer: PCT/EP2021/082530
(87) Internationale Veröffentlichungsnummer: WO 2022/112185

(56) Entgegenhaltungen:
- WO-A1-2019/110226
- WO-A1-2020/225205
- JP-A- H0 415 182
- US-A- 5 788 030

## Beschreibung

Die Erfindung bezieht sich auf einen Schwingungsdämpfer gemäß dem Oberbegriff von Anspruch 1.

Ein solcher Schwingungsdämpfer ist aus der WO 2020/225 205 A1 bekannt.

Ein weiterer Schwingungsdämpfer ist aus DE 100 25 399 A1 bekannt. Bei diesem sind die Steuerventile außenliegend am Behälterrohr angebracht. Dies ermöglicht im Vergleich zu Schwingungsdämpfern mit innenliegendem Steuerventil eine schlanke Bauweise des Behälterrohrs.

Über die elektrisch ansteuerbaren Steuerventile kann die Dämpfungskennlinie des Schwingungsdämpfers sowohl in der Zugstufe, d.h. bei einem Ausfahren der Kolbenstange, als auch in der Druckstufe, d.h. bei einem Einfahren der Kolbenstange und einer Bewegung des Kolbens in Richtung Bodenventileinrichtung, je nach Bedarf während des Fahrbetriebs eines Kraftfahrzeugs eingestellt werden. Dazu wird mittels der Steuerventile ein entsprechender Bypass oder zusätzlicher Überströmweg ergänzend zu einem Überströmweg über die Kolbenventileinrichtung und/oder die Bodenventileinrichtung mehr oder weniger geöffnet.

Bisweilen bestehen Einbausituationen, beispielsweise bei kurzen Schwingungsdämpfern, in welchen aus Packagegründen die außenliegenden Steuerventile in etwa auf gleicher Höhe und in etwa an gegenüberliegenden Seiten des Behälterrohrs angebracht werden sollen, damit die Steuerventile beim Einfedern der zugehörigen Radaufhängung mit umliegenden Komponenten kollidieren. Es kann dabei erforderlich sein, die Steuerventile möglichst in der Nähe des Bodenventils des Schwingungsdämpfers zu platzieren. An einem Kraftfahrzeug kann beispielsweise ein Steuerventil in Fahrtrichtung, das andere hingegen entgegen der Fahrtrichtung, weisen, wie dies in DE 100 25 399 A1 beschrieben ist. Jedoch sind auch andere Ausrichtungen möglich.

Bauartbedingt können die zusätzlichen Überströmwege nur jenseits der Extremstellungen des Kolbens in der zug- und Druckstufen aus den Arbeitskammern des Innenrohrs abgezweigt werden, also praktisch an entgegengesetzten Endabschnitten des Dämpfers in dessen Längsrichtung. Es würde sich daher auf den ersten Blick anbieten, die Steuerventile entsprechend oben und unten am Schwingungsdämpfer zu positionieren, was in der vorstehend genannten Einbausituation jedoch mitunter unerwünscht ist.

Abhilfe bieten hier zusätzliche Überströmeinrichtungen, welche den Aufbau des Schwingungsdämpfers zwar nicht vereinfachen, es jedoch ermöglichen, die Positionierung der Steuerventile freier zu gestalten. In DE 100 25 399 A1 sind mittels interner Überströmrohre um das Innenrohr herum die Steuerventile praktisch auf gleiche Höhe gebracht. Ein Zwischenring verbindet die beiden Überströmrohre und trennt gleichzeitig die beiden zusätzlichen Überströmwege. An diesem Zwischenring setzen zudem die beiden Steuerventile an, welche sich jeweils mit Abschnitten durch Öffnungen im Behälterrohr radial nach außen erstrecken. Dieser Zwischenring ist ein verhältnismäßig kompliziertes Bauteil mit einer Vielzahl von Dichtstellen und Durchtrittskanälen für das Dämpfungsmedium.

Vor diesem Hintergrund liegt der Erfindung die Aufgabe zugrunde, Alternativen aufzuzeigen, welche es weiterhin gestatten, die beiden Steuerventile außenliegend am Behälterrohr auf in etwa gleicher Höhe anzuordnen.

Diese Aufgabe wird durch einen Schwingungsdämpfer der eingangs genannten Art gelöst, welcher sich dadurch auszeichnet, dass die Bodenventileinrichtung eine der Arbeitskammern mit der Ausgleichskammer verbindet, um in der Zugstufe und in der Druckstufe des Schwingungsdämpfers ein Überströmen von Dämpfungsmedium zwischen besagter Arbeitskammer und der Ausgleichskammer zu ermöglichen, das Überströmrohr einen in Bezug auf die Längsachse des Schwingungsdämpfers abgeschrägten Endabschnitt aufweist, das erste Steuerventil an diesen abgeschrägten Endabschnitt angesetzt ist, und das zweite Steuerventil in Bezug auf die Längsachse des Schwingungsdämpfers auf Höhe des abgeschrägten Endabschnitts angeordnet ist.

Dies ermöglicht einen einfacheren Anschluss der Steuerventile. Aufgrund der Abschrägung am Überströmrohr kann einer der zusätzlichen Überströmwege an einer Seite des Behälterrohrs bis auf Höhe des Steuerventils für den anderen zusätzlichen Überströmweg ausgedehnt werden, so dass ein dezidierter Zwischenring zur Anbindung der Steuerventile entfallen kann.

Besondere Ausführungsarten der Erfindung sind Gegenstand weiterer Patentansprüche.

So kann in einer ersten Variante zur Bereitstellung des zweiten zusätzlichen Strömungswegs das Innenrohr eine radiale Öffnung zwischen der anderen Arbeitskammer und der Ausgleichskammer ausbilden. Das zweite Steuerventil kann in diesem Fall direkt an dieser radialen Öffnung angesetzt werden.

In einer zweiten Variante ist ein zweites Überströmrohr zwischen dem Innenrohr und dem Behälterrohr angeordnet, welches den zweiten zusätzlichen Strömungsweg von der anderen Arbeitskammer zu der Ausgleichskammer bereitstellt. Hierbei weist das zweite Überströmrohr einen in Bezug auf die Längsachse des Schwingungsdämpfers abgeschrägten Endabschnitt auf. Das zweite Steuerventil ist in diesem Fall an den abgeschrägten Endabschnitt des zweiten Überströmrohrs angesetzt, um ein Überströmen von Dämpfungsmedium über den zweiten zusätzlichen Strömungsweg zu kontrollieren. Im Vergleich zu der ersten Variante kann hierdurch die Position des zweiten Steuerventils in Längsrichtung des Schwingungsdämpfers flexibler gestaltet werden, da die Abhängigkeit der Steuerventilpositionierung von der Extremposition des Kolbens entfällt.

Gemäß einer besonderen Ausführungsart weisen die Überströmrohre mit ihren abgeschrägten Endabschnitten zueinander. Durch eine Verschränkung der abgeschrägten Endabschnitte wird axial Platz eingespart.

Die Überströmrohre können dabei untereinander unverbunden sein. Sie sind dann jeweils an den Stirnseiten der abgeschrägten Endabschnitte abgedichtet. Die Abmessungen der Überströmrohre können so unabhängig voneinander gewählt werden.

Alternativ können die die Überströmrohre an den Stirnseiten der abgeschrägten Endabschnitte miteinander verbunden sein, wobei die durch die Überströmrohre bereitgestellten ersten und zweiten zusätzlichen Strömungswege gegeneinander abgedichtet sind. Beide Überströmrohre lassen sich hierdurch in einer vormontierbaren Einheit zusammenfassen.

Zur Abdichtung kann zwischen den Stirnseiten der abgeschrägten Endabschnitte ein einfacher Dichtring angeordnet sein, der entsprechend der Abschrägung der Stirnseiten zur Längsachse des Schwingungsdämpfers schräg gestellt ist. Dieser Dichtring dichtet gleichzeitig beide Überströmrohre ab. Es ist jedoch auch möglich, in einem solchen Fall die Überströmrohre mittels jeweils eines eigenen Dichtrings anzudichten.

Insbesondere können die Überströmrohre gleiche Innen- und Außendurchmesser sowie an ihren abgeschrägten Endabschnitten entgegengesetzte schräge Schnittwinkel aufweisen und koaxial zueinander angeordnet sein. Die Überströmrohre lassen sich so einfach aus Rohrmaterial ablängen. Die korrespondierenden schrägen Stirnseiten können gegebenenfalls sogar im gleichen Schnitt hergestellt werden.

Ferner besteht die Möglichkeit, die beiden Überströmrohre in einem Stück, d.h. als ein Rohrstück zu fertigen und innerhalb eines solchen einstückigen Überströmrohrs eine in Bezug auf die Längsachse des Schwingungsdämpfers schrägstehende Dichteinrichtung zum Innenrohr vorzusehen, welche geleichzeitig die beiden zusätzlichen Strömungswege trennt. Die beiden Steuerventile sind hierbei auf Höhe der schrägstehenden Dichtungseinrichtung angeordnet sind, um ein Überströmen von Dämpfungsmedium über den jeweiligen zusätzlichen Strömungswege zu kontrollieren, d.h. das erste Steuerventil verbindet den ersten zusätzlichen Strömungsweg innerhalb des Überströmrohrs mit der Ausgleichskammer und das zweite Steuerventil verbindet den zweiten zusätzlichen Strömungsweg innerhalb des Überströmrohrs mit der Ausgleichskammer.

Die Steuerventile können an einander gegenüberliegenden Seiten des Behälterrohrs angeordnet sein und zwar entweder auf gleicher Höhe in Längsrichtung des Schwingungsdämpfers oder auch mit einem kleinen axialen Versatz, welchen die Verschränkung der abgeschrägten Endabschnitte im Gegensatz zu einem Zwischenring wie in DE 100 25 399 A1 eher zulässt.

Die Steuerventile für die zusätzlichen Strömungswege können beispielsweise derart konfiguriert sein, dass durch Öffnen des ersten Steuerventils in der Zugstufe eine weichere Dämpferkennlinie in der Zugstufe erhalten wird, und durch Öffnen des zweiten Steuerventils in der Druckstufe eine weichere Dämpferkennlinie in der Druckstufe erhalten wird.

Nachfolgend wird die Erfindung anhand von in der Zeichnung dargestellten Ausführungsbeispielen näher erläutert. Die Zeichnung zeigt in:
- Figur 1: eine schematische Darstellung des Hydraulikschaltplans für einen Schwingungsdämpfer nach der Erfindung,
- Figur 2: eine Seitenansicht eines ersten Ausführungsbeispiels eines Schwingungsdämpfers nach der Erfindung, und
- Figur 3: eine Seitenansicht eines zweiten Ausführungsbeispiels eines Schwingungsdämpfers nach der Erfindung.

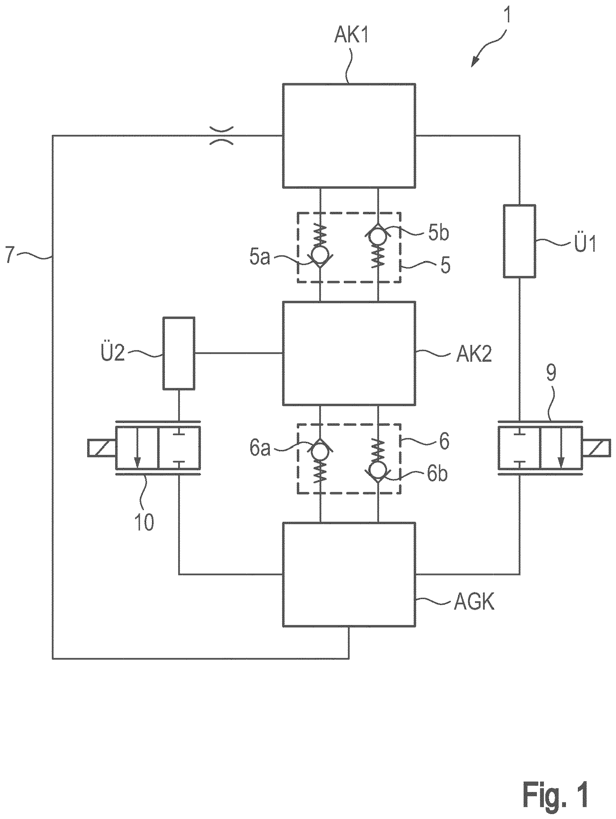

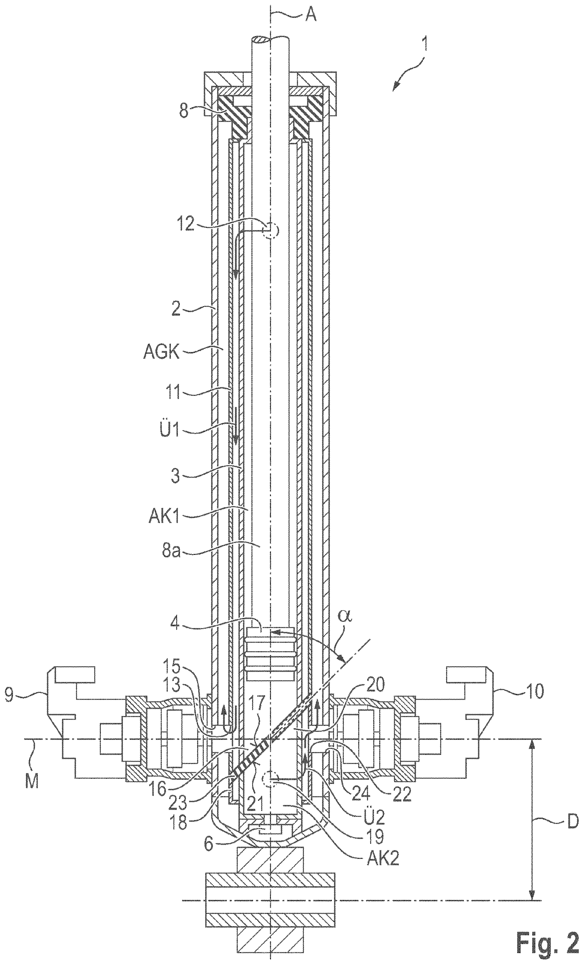

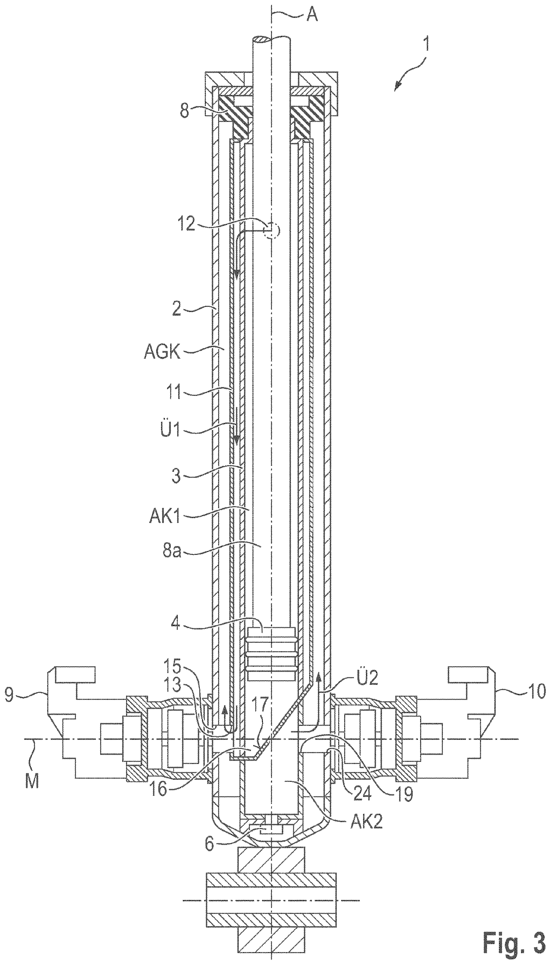

Figur 1 zeigt eine schematische Darstellung des Hydraulikschaltplans für einen Schwingungsdämpfer 1 nach der Erfindung, welcher beispielsweise dazu dient, in einer Kraftfahrzeugradaufhängung eingesetzt zu werden. In den Figuren 2 und 3 sind Ausführungsbeispiele für derart konfigurierte Schwingungsdämpfer 1 dargestellt, wobei gleiche Bauteile in beiden Ausführungsbeispielen mit gleichen Bezugszeichen versehen sind.

Der Schwingungsdämpfer 1 umfasst ein äußeres Behälterrohr 2, in welchem ein Innenrohr 3 angeordnet ist. Zwischen einem Innenumfang des Behälterrohrs 2 und einem Außenumfang des Innenohrs 3 befindet sich eine Ausgleichskammer AGK zur Aufnahme eines flüssigen Dämpfungsmediums.

In einem Innenraum des Innenrohrs 3 ist ein Kolben 4 axial bewegbar angeordnet ist. Der Kolben 4 unterteilt den Innenraum des Innenrohrs 3 in zwei Arbeitskammern AK1 und AK2. Es ist dabei gegen die Innenwand des Innenrohrs 3 mittels einer Gleitdichtung abgedichtet.

An dem Kolben 4 ist eine Kolbenventileinrichtung 5 angeordnet. Diese ist derart ausgebildet, um in einer Zugstufe und in einer Druckstufe des Schwingungsdämpfers 1 ein Überströmen von Dämpfungsmedium zwischen den Arbeitskammern AK1 und AK2 zu ermöglichen. Die Kolbenventileinrichtung 5 kann durch ein oder mehrere Ventile herkömmlicher Bauart gebildet werden. Vorliegend ist in Figur 1 beispielhaft für die Zugstufe und die Druckstufe jeweils ein federbelastetes Rückschlagventil 5a und 5b abgebildet, welche beispielsweise als Scheibenventile ausgeführt sein können. Jedoch sind an dieser Stelle auch andere Ventilformen möglich.

Weiterhin ist eine Bodenventileinrichtung 6 vorgesehen, die eine der Arbeitskammern AK2 mit der Ausgleichskammer AGK verbindet, um in der Zugstufe und in der Druckstufe des Schwingungsdämpfers 1 ein Überströmen von Dämpfungsmedium zwischen besagter Arbeitskammer AK2 und der Ausgleichskammer AGK zu ermöglichen. Die Bodenventileinrichtung 6 kann ähnlich der Kolbenventileinrichtung 5 durch ein oder mehrere z.B. federbelastete Ventile 6a und 6b gebildet werden.

Ferner kann die Ausgleichkammer AGK gegebenenfalls mit der bodenventilfernen Arbeitskammer AK1 hydraulisch verbunden sein. Diese hydraulische Verbindung 7 kann beispielsweise über eine Kolbenstangenführung 8 vorgenommen sein, welche das Behälterrohr 2 an der Seite einer aus dem Behälterrohr 2 austretenden Kolbenstange 8a verschließt.

Durch die Ventile der Kolbenventileinrichtung 5 und der Bodenventileinrichtung 6 wird eine erste Dämpferkennlinie für die Zug- und Druckstufe des Schwingungsdämpfers 1 festgelegt, welche aus dem Öffnungsverhalten der Ventile resultiert.

Diese Grundkennung des Schwingungsdämpfers 1 kann nun durch zusätzliche Strömungswege Ü1 und Ü2 und in diesen angeordnete elektrisch ansteuerbare Steuerventile 9 und 10 je nach Bedarf verändert werden. Durch Öffnen der zusätzlichen Strömungswege Ü1 und Ü2 kann jeweils eine weichere Dämpferkennlinie erhalten werden, wobei über die Steuerventile 9 und 10 die Kennliniengestaltung in der Zug- und Drucksteife unabhängig voneinander vorgenommen werden kann.

Die Steuerventile 9 und 10 werden hierzu über ein nicht näher dargestelltes Steuergerät angesteuert. Sie können beispielsweise als elektrisch ansteuerbare Proportional-Durchflussregelventile ausgeführt sein. Insbesondere können die Steuerventile 9 und 10 jeweils als Einrichtungsventile ausgeführt sein, welche einen Durchfluss in Gegenrichtung sperren.

Wie Figur 1 zeigt, ist ein erstes der Steuerventile 9 vorliegend in dem ersten zusätzlichen Strömungsweg Ü1 von einer ersten der Arbeitskammern AK1 zu der Ausgleichskammer AGK angeordnet. Bei dem dargestellten Schwingungsdämpfer 1 wird durch dessen Betätigung die Dämpferkennlinie in der Zugstufe beeinflusst.

Das zweite der Steuerventile 10 kontrolliert den Durchfluss von Dämpfungsmedium durch den zweiten zusätzlichen Strömungsweg Ü2 von der zweiten der Arbeitskammern AK2 zu der Ausgleichskammer AGK. Bei dem dargestellten Schwingungsdämpfer 1 wird durch Betätigung des zweiten Steuerventils 10 die Dämpferkennlinie in der Druckstufe beeinflusst.

Durch Öffnen des ersten Steuerventils 9 in der Zugstufe wird eine vergleichsweise weichere Dämpferkennlinie für die Zugstufe erhalten. Durch Öffnen des zweiten Steuerventils 10 wird in der Druckstufe eine weichere Dämpferkennlinie für die Druckstufe erhalten. Bei Schließen der Steuerventile 9 und 10 ergibt sich jeweils die härteste Dämpferkennlinie in der Zugstufe bzw. der Druckstufe. Da die Steuerventile 9 und 10 einen Durchfluss jeweils nur in eine Richtung zulassen, in die Gegenrichtung jedoch sperren, kann über die beiden zusätzlichen Strömungswege Ü1 und Ü2 das Kennlinienverhalten in der Zugstufe und Druckstufe unabhängig voneinander modelliert werden.

Wie Figur 2 zeigt, ist zur Bildung des ersten zusätzlichen Strömungswegs Ü1 von der ersten Arbeitskammer AK1 zu der Ausgleichskammer AKG ein erstes Überströmrohr 11 zwischen dem Innenrohr 3 und dem Behälterrohr 2 angeordnet. Das Innenrohr 3 weist eine radiale Öffnung 12 auf, über welche Dämpfungsmedium aus der ersten Arbeitskammer AK1 in der Zugstufe in den ersten zusätzlichen Überströmweg Ü1 verdrängt werden kann. Das Dämpfungsmedium strömt in diesem Fall durch einen Ringspalt, welcher zwischen dem Außenumfang des Innenrohrs 3 und dem Innenumfang des ersten Überströmrohrs 11 gebildet wird und welcher vorliegend als erster zusätzlicher Überströmweg Ü1 dient.

Der Ringspalt ist axial in Längsrichtung A des Schwingungsdämpfers 1 in beide Richtungen abgedichtet, d.h. sowohl in Richtung der Kolbenstangenführung 8 als auch in Richtung der Bodenventileinrichtung 6. Eine Radialöffnung 13 des ersten Überströmrohrs 11 ermöglicht jedoch ein Überströmen des Dämpfungsmediums in die Ausgleichskammer AGK. An der Stelle dieser Radialöffnung 13 ist das erste Steuerventil 9 angeordnet, um das Überströmen in die Ausgleichkammer AGK zu kontrollieren.

Wie Fig. 2 entnommen werden kann, weist das erste Überströmrohr 11 einen in Bezug auf die Längsachse A des Schwingungsdämpfers 1 abgeschrägten Endabschnitt 16 auf. In der in Fig. 2 dargestellten Seitenansicht erstreckt sich das erste Überströmrohr 11 an einer Seite des Innenrohrs 3 weiter nach unten als an der gegenüberliegenden Seite. Zudem ist in Figur 2 der Schrägungswinkel α zur Längsachse A des Schwingungsdämpfers 1 eingezeichnet. Dieser Schrägungswinkel α liegt vorzugsweise in einem Bereich von 30° bis 60°, vorzugsweise bei 45°. Hieraus resultiert eine zur Längsachse A des Schwingungsdämpfers 1 entsprechend schräg gestellte Stirnseite 17 des ersten Überströmrohrs 11.

Das erste Steuerventil 9 ist an diesen abgeschrägten Endabschnitt 16 radial angesetzt. Entsprechend befindet sich die Radialöffnung 13 radial außenseitig an dem abgeschrägten Endabschnitt 16. Gleichzeitig ist das zweite Steuerventil 10 in Bezug auf die Längsachse A des Schwingungsdämpfers 1 auf Höhe des abgeschrägten Endabschnitts 16 angeordnet.

Abschnitte des ersten Steuerventils 9 wie auch des zweiten Steuerventils 10 stehen radial außenseitig von dem Behälterrohr 2 ab. Letzteres weist für das erste Steuerventil eine entsprechende Öffnung 15 und für das zweite Steuerventil 10 eine entsprechende Öffnung 24 auf.

Bei dem ersten Ausführungsbeispiel gemäß Fig. 2 ist zur Bereitstellung des zweiten zusätzlichen Strömungswegs Ü2 ein zweites Überströmrohr 18 zwischen dem Innenrohr 3 und dem Behälterrohr 2 angeordnet. Der zweite zusätzliche Strömungsweg Ü2 verläuft von der zweiten Arbeitskammer AK2 zu der Ausgleichskammer AGK. An dem Innenrohr 3 ist hierzu eine radiale Öffnung 19 ausgebildet, welche in einen zwischen dem Außenumfang des Innenrohrs 3 und dem Innenumfang des zweiten Überströmrohrs 18 gebildeten Ringspalt mündet.

Auch das zweite Überströmrohr 18 weist einen in Bezug auf die Längsachse A des Schwingungsdämpfers 1 abgeschrägten Endabschnitt 20 auf. Der Ringspalt ist entsprechend bis in diesen abgeschrägten Endabschnitt 20 fortgesetzt. Dort ist auch das zweite Steuerventil 10 an den radial an das zweite Überströmrohr 18 angesetzt, um ein Überströmen von Dämpfungsmedium über den zweiten zusätzlichen Strömungsweg Ü2 zu kontrollieren. Das zweite Überströmrohr 18 weist entsprechend eine Radialöffnung 22 für das zweite Steuerventil 10 auf.

Abschnitte des zweiten Steuerventils 10 stehen wiederum radial außenseitig von dem Behälterrohr 2 ab, welches hierzu eine entsprechende radiale Öffnung 24 ausbildet, durch welche Abschnitte des zweiten Steuerventils 10 nach außen geführt sind.

Der abgeschrägte Endabschnitt 20 des zweiten Überströmrohrs 18 weist zu dem abgeschrägten Endabschnitt 16 des ersten Überströmrohrs 11. Die Abschrägung des zweiten Überströmrohrs 18 kann mit dem gleichen Schrägungswinkelwinkel α wie an dem ersten Überströmrohr 11 vorgenommen sein. Die entsprechend schräg gestellte Stirnseite 21 des zweiten Überströmrohrs 18 verläuft dabei vorzugsweise parallel zu der Stirnseite 17 des ersten Überströmrohrs 11, so dass beide abgeschrägten Endabschnitte 16 und 20 miteinander verschränkt werden können, wie dies in Figur 2 dargestellt ist.

Die Überströmrohre 11 und 18 können untereinander unverbunden sein, d.h. sie berühren einander nicht. Die jeweiligen Stirnseiten 17 und 21 der abgeschrägten Endabschnitte 16 und 20 sind jeweils gegenüber der Ausgleichskammer AGK abgedichtet, beispielsweise mittels entsprechenden Dichtringen zwischen dem Innenumfang der Überströmrohre 11 und 18 und dem Außenumfang des Innenrohrs 3. Zwischen den Stirnseiten 17 und 21 kann somit gegebenenfalls ein kleiner Axialabstand vorgesehen sein. Es ist auch möglich, die Stirnseiten 17 und 21 der Überströmrohre 11 und 18 axial gegeneinander abzustützen.

Ferner ist es möglich, die Überströmrohre 11 und 18 an den Stirnseiten 17 und 21 der abgeschrägten Endabschnitte 16 und 20 miteinander zu verbinden, beispielsweise miteinander zu verschweißen, wobei gleichzeitig sichergestellt wird, dass die durch die Überströmrohre 11 und 18 bereitgestellten ersten und zweiten zusätzlichen Strömungswege Ü1 und Ü2 gegeneinander abgedichtet sind.

Hierzu kann gegebenenfalls zwischen den Stirnseiten 17 und 21 der abgeschrägten Endabschnitte 16 und 20 eine Dichtscheibe 23 angeordnet sein ist, die zur Längsachse A des Schwingungsdämpfers 1 schräg gestellt ist. Alternativ können die Überströmrohre 11 und 18 auch separat mittels eigenen Dichtringen zum Innenrohr hin abgedichtet werden, wie dies oben bereits erwähnt wurde.

Bei dem dargestellten Ausführungsbeispiel gemäß Figur 2 weisen die beiden Überströmrohre 11 und 18 gleiche Innen- und Außendurchmesser auf. Sie können somit aus dem gleichen Rohrmaterial abgelängt werden.

Zudem können optional die beiden Überströmrohre 11 und 18 an ihren abgeschrägten Endabschnitten 16 und 20 gleiche Schrägungswinkel α aufweisen, d.h. mit einem Schnitt hergestellt sein.

Vorzugsweise sind die Überströmrohre 11 und 18 koaxial zueinander angeordnet.

Insbesondere können die beiden Überströmrohre 11 und 18 als vormontierbare Baueinheit ausgeführt werden, welche bereits eine Trennung für die beiden Überströmwege Ü1 und Ü2 beinhaltet, beispielsweise in Form der eingefügten Dichtscheibe 23.

Die vorstehend erläuterte Konfiguration ermöglicht es, die zwei Steuerventile 9 und 10 an gegenüberliegenden Außenseiten des Behälterrohrs 2 auf gleicher Höhe oder mit lediglich geringem axialen Versatz anzubringen, wobei diese jeweils unmittelbar an eine Öffnung 13 bzw. 22 des jeweiligen Überströmrohrs 11 bzw. 18 angeschlossen werden können.

Durch die überwiegend außenseitige Anordnung der Steuerventile 9 und 10 kann das Behälterrohr 2 sehr schlank ausgeführt werden. Die Anordnung der Steuerventile 9 und 10 in etwa auf gleicher Höhe, jedoch einander gegenüberliegende am Außenumfang des Behälterrohrs 2 ermöglicht gleichwohl ein für den Einbau in eine Kraftfahrzeugradaufhängung günstiges Package.

Insbesondere können die Steuerventile 9 und 10 in einem radnahen Bereich am Außenumfang des Schwingungsdämpfers 1, d.h. in der Nähe der Bodenventileinrichtung 6 angeordnet werden.

Durch die Verwendung des zweiten Überströmrohrs 18 ist die Positionierung der Steuerventile 9 und 10 unabhängig von der Lage der radialen Öffnungen 12 und 19 des Innenrohrs 3 jenseits der Extrempositionen des Kolbens 4.

Prinzipiell kann durch die Verwendung von zwei Überströmrohren 11 und 18 die Lage D der Steuerventile 9 und 10 in Längsrichtung A des Schwingungsdämpfers 1 sehr frei gewählt werden.

Vorzugsweise erfolgt die Anordnung auf einer Höhe zwischen den Radialöffnungen 12 und 19 des Innenrohrs 3, und weiter bevorzugt in einem unteren Drittel des Abstands zwischen diesen Öffnungen 12 und 19, wobei als Referenz für die Lage der Steuerventile 9 und 10 die Ventilmitte M dient.

In einer bevorzugten Variante liegt die Ventilmitte M des zweiten Steuerventils 10 oberhalb der Mitte der Radialöffnung 12.

In Abwandlung des Ausführungsbeispiels gemäß Fig. 2 wie vorstehend beschrieben können die die beiden Überströmrohre 11 und 18 in einem Stück, d.h. als ein Rohrstück gefertigt sein. Zur Ermöglichung der axialen Verschränkung der beiden zusätzlichen Strömungswege Ü1 und Ü2 wird in diesem Fall innerhalb des einstückigen Überströmrohrs eine in Bezug auf die Längsachse A des Schwingungsdämpfers 1 schrägstehende Dichteinrichtung zum Innenrohr 3 angeordnet, welche geleichzeitig die beiden zusätzlichen Strömungswege Ü1 und Ü2 voneinander trennt. Die beiden Steuerventile 9 und 10 sind hierbei auf Höhe der schrägstehenden Dichtungseinrichtung angeordnet, um ein Überströmen von Dämpfungsmedium über den jeweiligen zusätzlichen Strömungsweg Ü1 bzw. Ü2 zu kontrollieren. Das erste Steuerventil 9 verbindet dabei den ersten zusätzlichen Strömungsweg Ü1 innerhalb des einstückigen Überströmrohrs mit der Ausgleichskammer AGK und das zweite Steuerventil 10 verbindet den zweiten zusätzlichen Strömungsweg Ü2 innerhalb des Überströmrohrs mit der Ausgleichskammer AGK.

Figur 3 zeigt in Form eines zweiten Ausführungsbeispiels eine vereinfachte Ausführungsvariante des ersten Ausführungsbeispiels. In diesem Fall ist das zweite Überströmrohr 18 weggelassen.

Zur Bereitstellung des zweiten zusätzlichen Strömungswegs Ü2 weist in Fig. 3 das Innenrohr 3 lediglich die radiale Öffnung 19 zwischen der zweiten Arbeitskammer AK2 und der Ausgleichskammer AGK auf. Das zweite Steuerventil 10 ist direkt an dieser radialen Öffnung 19 angesetzt und kontrolliert so das Überströmen von Dämpfungsmedium in die Ausgleichskammer AGK.

Die Erfindung wurde vorstehend anhand verschiedener Ausführungsbeispiele und -varianten näher erläutert. Diese dienen dazu, die Ausführbarkeit der Erfindung zu belegen. Technische Einzelmerkmale, welche oben im Kontext weiterer Einzelmerkmale erläutert wurden, können auch unabhängig von diesen sowie in Kombination mit weiteren Einzelmerkmalen verwirklicht werden, selbst wenn dies nicht ausdrücklich beschrieben ist, solange dies technisch möglich ist. Die Erfindung ist daher ausdrücklich nicht auf die konkret beschriebenen Ausführungsbeispiele, -varianten und Abwandlungen beschränkt, sondern umfasst alle durch die Patentansprüche definierten Ausgestaltungen.

### Bezugszeichenliste

- 1: Schwingungsdämpfer
- 2: Behälterrohr
- 3: Innenrohr
- 4: Kolben
- 5: Kolbenventileinrichtung (passiv)
- 5a: Kolbenventil
- 5b: Kolbenventil
- 6: Bodenventileinrichtung (passiv)
- 6a: Bodenventil
- 6b: Bodenventil
- 7: Verbindung
- 8: Kolbenstangendichtung
- 8a: Kolbenstange
- 9: erstes Steuerventil (elektrisch angesteuert)
- 10: zweites Steuerventil (elektrisch angesteuert)
- 11: erstes Überströmrohr
- 12: Radialöffnung
- 13: Radialöffnung
- 15: Öffnung
- 16: abgeschrägter Endabschnitt
- 17: Stirnseite
- 18: zweites Überströmrohr
- 19: Radialöffnung
- 20: abgeschrägter Endabschnitt
- 21: Stirnseite
- 22: Radialöffnung
- 23: Dichtring (schrägstehend)
- 24: Öffnung
- α: Schrägungswinkel
- A: Längsachse
- AK1: erste Arbeitskammer
- AK2: zweite Arbeitskammer
- AGK: Ausgleichskammer
- M: Ventilmitte (bezogen auf die Schließfunktion des zugehörigen Ventilkörpers)
- Ü1: zusätzlicher Überströmweg
- Ü2: zusätzlicher Überströmweg

## Patentansprüche

1. Schwingungsdämpfer (1), umfassend ein Behälterrohr (2), ein Innenrohr (3), einen Kolben (4), eine Kolbenventileinrichtung (5), eine Bodenventileinrichtung (6), ein Überströmrohr (11), ein elektrisch ansteuerbares erstes Steuerventil (9), und ein elektrisch ansteuerbares zweites Steuerventil (10), wobei
das Innenrohr (3) in dem Behälterrohr (2) angeordnet ist,
der Kolben (4) axial bewegbar in dem Innenrohr (3) angeordnet ist und einen Innenraum des Innenrohrs (3) in zwei Arbeitskammern (AK1, AK2) unterteilt,
die Kolbenventileinrichtung (5) an dem Kolben (4) angeordnet und derart ausgebildet ist, um in einer Zugstufe und in einer Druckstufe des Schwingungsdämpfers (1) ein Überströmen von Dämpfungsmedium zwischen den Arbeitskammern (AK1, AK2) zu ermöglichen,
zwischen dem Innenumfang des Behälterrohrs (2) und dem Außenumfang des Innenohrs (3) eine Ausgleichskammer (AGK) vorgesehen ist,
das Überströmrohr (11) zwischen dem Innenrohr (3) und dem Behälterrohr (2) angeordnet ist und einen ersten zusätzlichen Strömungsweg (Ü1) von einer der Arbeitskammern (AK1) zu der Ausgleichskammer (AGK) bereitstellt,
das erste Steuerventil (9) mit dem ersten zusätzlichen Strömungsweg (Ü1) zusammenwirkt, um ein Überströmen von Dämpfungsmedium über den ersten zusätzlichen Strömungsweg (Ü1) zu kontrollieren,
das zweite Steuerventil (10) mit einem zweiten zusätzlichen Strömungsweg (Ü2) von der anderen Arbeitskammer (AK2) zu der Ausgleichskammer (AGK) zusammenwirkt, um ein Überströmen von Dämpfungsmedium über den zweiten zusätzlichen Strömungsweg (Ü2) zu kontrollieren, und
Abschnitte des ersten Steuerventils (9) und Abschnitte des zweiten Steuerventils (10) radial außenseitig von dem Behälterrohr (2) abstehen,
**dadurch gekennzeichnet, dass**
die Bodenventileinrichtung (6) eine der Arbeitskammern (AK2) mit der Ausgleichskammer (AGK) verbindet, um in der Zugstufe und in der Druckstufe des Schwingungsdämpfers (1) ein Überströmen von Dämpfungsmedium zwischen besagter Arbeitskammer (AK2) und der Ausgleichskammer (AGK) zu ermöglichen,
das Überströmrohr (11) einen in Bezug auf die Längsachse (A) des Schwingungsdämpfers (1) abgeschrägten Endabschnitt (16) aufweist,
das erste Steuerventil (9) an diesen abgeschrägten Endabschnitt (16) angesetzt ist, und das zweite Steuerventil (10) in Bezug auf die Längsachse (A) des Schwingungsdämpfers (1) auf Höhe des abgeschrägten Endabschnitts (16) angeordnet ist.

2. Schwingungsdämpfer (1) nach Anspruch 1, **dadurch gekennzeichnet, dass** zur Bereitstellung des zweiten zusätzlichen Strömungswegs (Ü2) das Innenrohr (3) eine radiale Öffnung (19) zwischen der anderen Arbeitskammer (AK1) und der Ausgleichskammer (AGK) ausbildet und das zweite Steuerventil (10) an dieser radialen Öffnung (19) angesetzt ist.

3. Schwingungsdämpfer nach Anspruch 1, **dadurch gekennzeichnet, dass** ein zweites Überströmrohr (18) zwischen dem Innenrohr (3) und dem Behälterrohr (2) angeordnet ist und den zweiten zusätzlichen Strömungsweg (Ü2) von der anderen Arbeitskammer (AK2) zu der Ausgleichskammer (AGK) bereitstellt, wobei das zweite Überströmrohr (18) einen in Bezug auf die Längsachse (A) des Schwingungsdämpfers (1) abgeschrägten Endabschnitt (20) aufweist und das zweite Steuerventil (10) an den abgeschrägten Endabschnitt (20) des zweiten Überströmrohrs (18) angesetzt, um ein Überströmen von Dämpfungsmedium über den zweiten zusätzlichen Strömungsweg (Ü2) zu kontrollieren.

4. Schwingungsdämpfer nach Anspruch 3, **dadurch gekennzeichnet, dass** die Überströmrohre (11, 18) mit ihren abgeschrägten Endabschnitten (16, 20) zueinander weisen.

5. Schwingungsdämpfer nach Anspruch 4, **dadurch gekennzeichnet, dass** die Überströmrohre (11, 18) untereinander unverbunden sind und an den Stirnseiten (17, 21) der abgeschrägten Endabschnitte (16, 20) abgedichtet sind.

6. Schwingungsdämpfer nach Anspruch 4, **dadurch gekennzeichnet, dass** die Überströmrohre (11, 18) an den Stirnseiten (17, 21) der abgeschrägten Endabschnitte (16, 20) miteinander verbunden und die durch die Überströmrohre (11, 18) bereitgestellten ersten und zweiten zusätzlichen Strömungswege (Ü1, Ü2) gegeneinander abgedichtet sind.

7. Schwingungsdämpfer nach Anspruch 4 oder 6, **dadurch gekennzeichnet, dass** zwischen den Stirnseiten (17, 21) der abgeschrägten Endabschnitte (16, 20) eine Dichtscheibe (23) angeordnet ist, die zur Längsachse (A) des Schwingungsdämpfers (1) schräg gestellt ist.

8. Schwingungsdämpfer nach einem der Ansprüche 3 bis 7, **dadurch gekennzeichnet, dass** die Überströmrohre (11, 18) gleiche Innen- und Außendurchmesser sowie an ihren abgeschrägten Endabschnitten (16, 20) gleiche Schrägungswinkel (α) aufweisen und koaxial zueinander angeordnet sind.

9. Schwingungsdämpfer (1), umfassend ein Behälterrohr (2), ein Innenrohr (3), einen Kolben (4), eine Kolbenventileinrichtung (5), eine Bodenventileinrichtung (6), ein Überströmrohr (11), ein elektrisch ansteuerbares erstes Steuerventil (9), und ein elektrisch ansteuerbares zweites Steuerventil (10), wobei
das Innenrohr (3) in dem Behälterrohr (2) angeordnet ist,
der Kolben (4) axial bewegbar in dem Innenrohr (3) angeordnet ist und einen Innenraum des Innenrohrs (3) in zwei Arbeitskammern (AK1, AK2) unterteilt,
die Kolbenventileinrichtung (5) an dem Kolben (4) angeordnet und derart ausgebildet ist, um in einer Zugstufe und in einer Druckstufe des Schwingungsdämpfers (1) ein Überströmen von Dämpfungsmedium zwischen den Arbeitskammern (AK1, AK2) zu ermöglichen,
zwischen dem Innenumfang des Behälterrohrs (2) und dem Außenumfang des Innenohrs (3) eine Ausgleichskammer (AGK) vorgesehen ist,
die Bodenventileinrichtung (6) eine der Arbeitskammern (AK2) mit der Ausgleichskammer (AGK) verbindet, um in der Zugstufe und in der Druckstufe des Schwingungsdämpfers (1) ein Überströmen von Dämpfungsmedium zwischen besagter Arbeitskammer (AK2) und der Ausgleichskammer (AGK) zu ermöglichen,
das Überströmrohr (11) zwischen dem Innenrohr (3) und dem Behälterrohr (2) angeordnet ist und einen ersten zusätzlichen Strömungsweg (Ü1) von einer der Arbeitskammern (AK1) zu der Ausgleichskammer (AGK) bereitstellt,
das erste Steuerventil (9) mit dem ersten zusätzlichen Strömungsweg (Ü1) zusammenwirkt, um ein Überströmen von Dämpfungsmedium über den ersten zusätzlichen Strömungsweg (Ü1) zu kontrollieren,
das zweite Steuerventil (10) mit einem zweiten zusätzlichen Strömungsweg (Ü2) von der anderen Arbeitskammer (AK2) zu der Ausgleichskammer (AGK) zusammenwirkt, um ein Überströmen von Dämpfungsmedium über den zweiten zusätzlichen Strömungsweg (Ü2) zu kontrollieren, und
Abschnitte des ersten Steuerventils (9) und Abschnitte des zweiten Steuerventils (10) radial außenseitig von dem Behälterrohr (2) abstehen,
**dadurch gekennzeichnet, dass**
das Überströmrohr (11, 18) ferner den zweiten zusätzlichen Strömungsweg (Ü2) von der anderen Arbeitskammer (AK2) zu der Ausgleichskammer (AGK) bereitstellt, wobei zwischen dem ersten zusätzlichen Strömungsweg (Ü1) und dem zweiten zusätzlichen Strömungsweg (Ü2) eine in Bezug auf die Längsachse (A) des Schwingungsdämpfers (1) schrägstehende Dichtungseinrichtung (23) angeordnet ist, und
das erste Steuerventil (9) und das zweite Steuerventil (10) auf Höhe der schrägstehenden Dichtungseinrichtung (23) derart angeordnet sind, um ein Überströmen von Dämpfungsmedium über den jeweiligen zusätzlichen Strömungsweg (Ü1, Ü2) zu kontrollieren.

10. Schwingungsdämpfer nach einem der Ansprüche 1 bis 9, **dadurch gekennzeichnet, dass** die Steuerventile (9, 10) an einander gegenüberliegenden Seiten des Behälterrohrs (3) angeordnet sind.

## Claims

1. Vibration damper (1), comprising a container pipe (2), an inner pipe (3), a piston (4), a piston valve device (5), a bottom valve device (6), an overflow pipe (11), an electrically controllable first control valve (9), and an electrically controllable second control valve (10),
the inner pipe (3) being arranged in the container pipe (2),
the piston (4) being arranged so as to be axially movable in the inner pipe (3) and dividing an interior of the inner pipe (3) into two working chambers (AK1, AK2),
the piston valve device (5) being arranged on the piston (4) and being designed to allow an overflow of damping medium between the working chambers (AK1, AK2) in a rebound stage and in a compression stage of the vibration damper (1),
a compensation chamber (AGK) being provided between the inner circumference of the container pipe (2) and the outer circumference of the inner pipe (3),
the overflow pipe (11) being arranged between the inner pipe (3) and the container pipe (2) and providing a first additional flow path (Ü1) from one of the working chambers (AK1) to the compensation chamber (AGK),
the first control valve (9) cooperating with the first additional flow path (U1) in order to check an overflow of damping medium via the first additional flow path (U1),
the second control valve (10) cooperating with a second additional flow path (Ü2) from the other working chamber (AK2) to the compensation chamber (AGK) in order to check an overflow of damping medium via the second additional flow path (Ü2), and
portions of the first control valve (9) and portions of the second control valve (10) protruding radially outward from the container pipe (2),
**characterized in that**
the bottom valve device (6) connects one of the working chambers (AK2) to the compensation chamber (AGK) in order to allow an overflow of damping medium between said working chamber (AK2) and the compensation chamber (AGK) in the rebound stage and in the compression stage of the vibration damper (1),
the overflow pipe (11) has an end portion (16) which is beveled with respect to the longitudinal axis (A) of the vibration damper (1),
the first control valve (9) is attached to this beveled end portion (16), and the second control valve (10) is arranged at the level of the beveled end portion (16) with respect to the longitudinal axis (A) of the vibration damper (1).

2. Vibration damper (1) according to claim 1, **characterized in that** to provide the second additional flow path (Ü2), the inner pipe (3) forms a radial opening (19) between the other working chamber (AK1) and the compensation chamber (AGK) and the second control valve (10) is attached to this radial opening (19).

3. Vibration damper according to claim 1, **characterized in that** a second overflow pipe (18) is arranged between the inner pipe (3) and the container pipe (2) and provides the second additional flow path (Ü2) from the other working chamber (AK2) to the compensation chamber (AGK), the second overflow pipe (18) having an end portion (20) which is beveled with respect to the longitudinal axis (A) of the vibration damper (1) and the second control valve (10) being attached to the beveled end portion (20) of the second overflow pipe (18) in order to check an overflow of damping medium via the second additional flow path (Ü2).

4. Vibration damper according to claim 3, **characterized in that** the overflow pipes (11, 18) face each other with their beveled end portions (16, 20).

5. Vibration damper according to claim 4, **characterized in that** the overflow pipes (11, 18) are not connected to each other and are sealed at the end faces (17, 21) of the beveled end portions (16, 20).

6. Vibration damper according to claim 4, **characterized in that** the overflow pipes (11, 18) are connected to one another at the end faces (17, 21) of the beveled end portions (16, 20) and the first and second additional flow paths (Ü1, U2) provided by the overflow pipes (11, 18) are sealed against one another.

7. Vibration damper according to either claim 4 or claim 6,
**characterized in that** a sealing disk (23) is arranged between the end faces (17, 21) of the beveled end portions (16, 20), which is inclined with respect to the longitudinal axis (A) of the vibration damper (1).

8. Vibration damper according to any of claims 3 to 7,
**characterized in that** the overflow pipes (11, 18) have the same inner and outer diameters and the same helix angle (α) at their beveled end portions (16, 20) and are arranged coaxially to one another.

9. Vibration damper (1), comprising a container pipe (2), an inner pipe (3), a piston (4), a piston valve device (5), a bottom valve device (6), an overflow pipe (11), an electrically controllable first control valve (9), and an electrically controllable second control valve (10),
the inner pipe (3) being arranged in the container pipe (2),
the piston (4) being arranged so as to be axially movable in the inner pipe (3) and dividing an interior of the inner pipe (3) into two working chambers (AK1, AK2),
the piston valve device (5) being arranged on the piston (4) and being designed to allow an overflow of damping medium between the working chambers (AK1, AK2) in a rebound stage and in a compression stage of the vibration damper (1),
a compensation chamber (AGK) being provided between the inner circumference of the container pipe (2) and the outer circumference of the inner pipe (3),
the bottom valve device (6) connecting one of the working chambers (AK2) to the compensation chamber (AGK) in order to allow an overflow of damping medium between said working chamber (AK2) and the compensation chamber (AGK) in the rebound stage and in the compression stage of the vibration damper (1),
the overflow pipe (11) being arranged between the inner pipe (3) and the container pipe (2) and providing a first additional flow path (Ü1) from one of the working chambers (AK1) to the compensation chamber (AGK),
the first control valve (9) cooperating with the first additional flow path (U1) in order to check an overflow of damping medium via the first additional flow path (Ü1),
the second control valve (10) cooperating with a second additional flow path (Ü2) from the other working chamber (AK2) to the compensation chamber (AGK) in order to check an overflow of damping medium via the second additional flow path (Ü2), and
portions of the first control valve (9) and portions of the second control valve (10) protruding radially outward from the container pipe (2),
**characterized in that**
the overflow pipe (11, 18) further provides the second additional flow path (Ü2) from the other working chamber (AK2) to the compensation chamber (AGK), a sealing device (23) inclined with respect to the longitudinal axis (A) of the vibration damper (1) being arranged between the first additional flow path (U1) and the second additional flow path (Ü2), and
the first control valve (9) and the second control valve (10) are arranged at the level of the inclined sealing device (23) in order to check an overflow of damping medium via the relevant additional flow path (Ü1, Ü2).

10. Vibration damper according to any of claims 1 to 9, **characterized in that** the control valves (9, 10) are arranged on opposite sides of the container pipe (3).

## Revendications

1. Amortisseur de vibrations (1), comprenant un tube de récipient (2), un tube intérieur (3), un piston (4), un dispositif de soupape à piston (5), un dispositif de soupape de fond (6), un tube de débordement (11), une première soupape de commande (9) à commande électrique, et une seconde soupape de commande (10) à commande électrique, dans lequel
le tube intérieur (3) est disposé dans le tube de récipient (2),
le piston (4) est disposé de manière mobile axialement dans le tube intérieur (3) et divise un espace intérieur du tube intérieur (3) en deux chambres de travail (AK1, AK2),
le dispositif de soupape à piston (5) est disposé sur le piston (4) et est réalisé de manière à permettre, dans un étage de traction et dans un étage de compression de l'amortisseur de vibrations (1), un débordement de fluide d'amortissement entre les chambres de travail (AK1, AK2),
une chambre d'équilibrage (AGK) est prévue entre la périphérie intérieure du tube de récipient (2) et la périphérie extérieure du tube intérieur (3),
le tube de débordement (11) est disposé entre le tube intérieur (3) et le tube de récipient (2) et fournit un premier trajet d'écoulement supplémentaire (Ü1) depuis l'une des chambres de travail (AK1) vers la chambre d'équilibrage (AGK),
la première soupape de commande (9) coopère avec le premier trajet d'écoulement supplémentaire (Ü1) pour contrôler un débordement de fluide d'amortissement par l'intermédiaire du premier trajet d'écoulement supplémentaire (Ü1),
la seconde soupape de commande (10) coopère avec un second trajet d'écoulement supplémentaire (Ü2) depuis l'autre chambre de travail (AK2) jusqu'à la chambre d'équilibrage (AGK) afin de contrôler un débordement de fluide d'amortissement par l'intermédiaire du second trajet d'écoulement supplémentaire (Ü2), et
des sections de la première soupape de commande (9) et des sections de la seconde soupape de commande (10) dépassent radialement vers l'extérieur du tube de récipient (2),
**caractérisé en ce que**
le dispositif de soupape de fond (6) relie l'une des chambres de travail (AK2) à la chambre d'équilibrage (AGK) pour permettre un débordement du fluide d'amortissement entre ladite chambre de travail (AK2) et la chambre d'équilibrage (AGK) dans l'étage de traction et dans l'étage de compression de l'amortisseur de vibrations (1),
le tube de débordement (11) présente une section d'extrémité (16) inclinée par rapport à l'axe longitudinal (A) de l'amortisseur de vibrations (1),
la première soupape de commande (9) est placée sur cette section d'extrémité inclinée (16), et la seconde soupape de commande (10) est disposée à la hauteur de la section d'extrémité biseautée (16) par rapport à l'axe longitudinal (A) de l'amortisseur de vibrations (1).

2. Amortisseur de vibrations (1) selon la revendication 1,
**caractérisé en ce que,** pour la fourniture du second trajet d'écoulement supplémentaire (Ü2), le tube intérieur (3) réalise une ouverture radiale (19) entre l'autre chambre de travail (AK1) et la chambre d'équilibrage (AGK) et la seconde soupape de commande (10) est placée sur cette ouverture radiale (19).

3. Amortisseur de vibrations selon la revendication 1,
**caractérisé en ce qu'**un second tube de débordement (18) est disposé entre le tube intérieur (3) et le tube de récipient (2) et fournit le second trajet d'écoulement supplémentaire (Ü2) de l'autre chambre de travail (AK2) à la chambre d'équilibrage (AGK), dans lequel le second tube de débordement (18) présente une section d'extrémité (20) inclinée par rapport à l'axe longitudinal (A) de l'amortisseur de vibrations (1), et la seconde soupape de commande (10) est placée sur la section d'extrémité inclinée (20) du second tube de débordement (18) pour contrôler un débordement de fluide d'amortissement par l'intermédiaire du second trajet d'écoulement supplémentaire (Ü2).

4. Amortisseur de vibrations selon la revendication 3, **caractérisé en ce que** les tubes de débordement (11, 18) sont orientés l'un vers l'autre avec leurs sections d'extrémité inclinées (16, 20).

5. Amortisseur de vibrations selon la revendication 4, **caractérisé en ce que** les tubes de débordement (11, 18) ne sont pas reliés entre eux et sont rendus étanches au niveau des faces frontales (17, 21) des sections d'extrémité inclinées (16, 20).

6. Amortisseur de vibrations selon la revendication 4, **caractérisé en ce que** les tubes de débordement (11, 18) sont reliés entre eux au niveau des faces frontales (17, 21) des sections d'extrémité inclinées (16, 20) et les premier et second trajets d'écoulement supplémentaires (Ü1, Ü2) fournis par les tubes de débordement (11, 18) sont rendus étanches l'un par rapport à l'autre.

7. Amortisseur de vibrations selon la revendication 4 ou 6,
**caractérisé en ce que,** entre les faces frontales (17, 21) des sections d'extrémité inclinées (16, 20) est disposée une rondelle d'étanchéité (23) qui est inclinée par rapport à l'axe longitudinal (A) de l'amortisseur de vibrations (1).

8. Amortisseur de vibrations selon l'une des revendications 3 à 7, **caractérisé en ce que** les tubes de débordement (11, 18) présentent des diamètres intérieur et extérieur identiques ainsi que des angles d'inclinaison (α) identiques au niveau de leurs sections d'extrémité inclinées (16, 20) et sont disposés coaxialement l'un par rapport à l'autre.

9. Amortisseur de vibrations (1), comprenant un tube de récipient (2), un tube intérieur (3), un piston (4), un dispositif de soupape à piston (5), un dispositif de soupape de fond (6), un tube de débordement (11), une première soupape de commande (9) à commande électrique, et une seconde soupape de commande (10) à commande électrique, dans lequel
le tube intérieur (3) est disposé dans le tube de récipient (2),
le piston (4) est disposé de manière mobile axialement dans le tube intérieur (3) et divise un espace intérieur du tube intérieur (3) en deux chambres de travail (AK1, AK2),
le dispositif de soupape à piston (5) est disposé sur le piston (4) et est réalisé de manière à permettre, dans un étage de traction et dans un étage de compression de l'amortisseur de vibrations (1), un débordement de fluide d'amortissement entre les chambres de travail (AK1, AK2),
une chambre d'équilibrage (AGK) est prévue entre la périphérie intérieure du tube de récipient (2) et la périphérie extérieure du tube intérieur (3),
le dispositif de soupape de fond (6) relie l'une des chambres de travail (AK2) à la chambre d'équilibrage (AGK) pour permettre un débordement du fluide d'amortissement entre ladite chambre de travail (AK2) et la chambre d'équilibrage (AGK) dans l'étage de traction et dans l'étage de compression de l'amortisseur de vibrations (1),
le tube de débordement (11) est disposé entre le tube intérieur (3) et le tube de récipient (2) et fournit un premier trajet d'écoulement supplémentaire (Ü1) depuis l'une des chambres de travail (AK1) vers la chambre d'équilibrage (AGK),
la première soupape de commande (9) coopère avec le premier trajet d'écoulement supplémentaire (Ü1) pour contrôler un débordement de fluide d'amortissement par l'intermédiaire du premier trajet d'écoulement supplémentaire (Ü1),
la seconde soupape de commande (10) coopère avec un second trajet d'écoulement supplémentaire (Ü2) depuis l'autre chambre de travail (AK2) jusqu'à la chambre d'équilibrage (AGK) afin de contrôler un débordement de fluide d'amortissement par l'intermédiaire du second trajet d'écoulement supplémentaire (Ü2), et
des sections de la première soupape de commande (9) et des sections de la seconde soupape de commande (10) dépassent radialement vers l'extérieur du tube de récipient (2),
**caractérisé en ce que**
le tube de débordement (11, 18) fournit en outre le second trajet d'écoulement supplémentaire (Ü2) depuis l'autre chambre de travail (AK2) jusqu'à la chambre d'équilibrage (AGK), dans lequel un dispositif d'étanchéité (23) incliné par rapport à l'axe longitudinal (A) de l'amortisseur de vibrations (1) est disposé entre le premier trajet d'écoulement supplémentaire (Ü1) et le second trajet d'écoulement supplémentaire (Ü2), et
la première soupape de commande (9) et la seconde soupape de commande (10) sont disposées à la hauteur du dispositif d'étanchéité incliné (23) de manière à contrôler un débordement de fluide d'amortissement par l'intermédiaire du trajet d'écoulement supplémentaire (Ü1, Ü2) respectif.

10. Amortisseur de vibrations selon l'une des revendications 1 à 9, **caractérisé en ce que** les soupapes de commande (9, 10) sont disposées sur des côtés opposés du tube de récipient (3).
